**Europäisches Patentamt**

**European Patent Office**

**Office européen des brevets**

(11) Publication number : **0 388 863 B1**

(12) # EUROPEAN PATENT SPECIFICATION

(45) Date of publication of patent specification :
**13.12.95 Bulletin 95/50**

(51) Int. Cl.⁶ : **G05D 23/19, B29C 45/72**

(21) Application number : **90105175.5**

(22) Date of filing : **20.03.90**

(54) **Temperature control device**

(30) Priority : **20.03.89 JP 66385/89**

(43) Date of publication of application :
**26.09.90 Bulletin 90/39**

(45) Publication of the grant of the patent :
**13.12.95 Bulletin 95/50**

(84) Designated Contracting States :
**DE ES GB**

(56) References cited :
**CH-A- 484 711**
**PLASTICS AND RUBBER INTERNATIONAL,**
**vol. 4, no. 5, September 1979, LONDON, GB;**
**pages 211-215; PHJ Ingham: "Temperature**
**control techniques for injection moulding**
**machines"**
**PATENT ABSTRACTS OF JAPAN vol. 8, no. 60**
**(P-262)(1497) 22 March 1984 & JP-A-58 211 218**
**(HITACHI) 8 December 1983**
**Plastiques Modernes et Elastomères, Novem-**
**ber 1971, pages 121-122; "Contrôle de tem-**
**pérature sur machines à traiter les matières**
**plastiques"**

(73) Proprietor : **Toshiba Machine Company**
**Limited**
**2-11, 4-chome Ginza,**
**Chuo-ku**
**Tokyo (JP)**

(72) Inventor : **Hosoya, Tsutomu**
**c/o Toshiba Machine Co. Ltd.,**
**2068-3 Oooka**
**Numazu-shi, Shizuoka-ken (JP)**
Inventor : **Inaba, Katsuhiro**
**c/o Toshiba Machine Co. Ltd.,**
**2068-3 Oooka**
**Numazu-shi, Shizuoka-ken (JP)**
Inventor : **Akiyama, Toru**
**c/o Toshiba Machine Co. Ltd.,**
**2068-3 Oooka**
**Numazu-shi, Shizuoka-ken (JP)**
Inventor : **Fujita, Shigeru**
**c/o Toshiba Machine Co. Ltd.,**
**2068-3 Oooka**
**Numazu-shi, Shizuoka-ken (JP)**

(74) Representative : **Patentanwälte Dipl.-Ing. R.**
**Splanemann Dr. B. Reitzner Dipl.-Ing. K.**
**Baronetzky**
**Tal 13**
**D-80331 München (DE)**

Note : Within nine months from the publication of the mention of the grant of the European patent, any
person may give notice to the European Patent Office of opposition to the European patent granted.
Notice of opposition shall be filed in a written reasoned statement. It shall not be deemed to have been
filed until the opposition fee has been paid (Art. 99(1) European patent convention).

## Description

The present invention relates to a temperature control device, according to the opening portion of claim 1.

Such a temperature control device is known from JP-A-58 211 218. This temperature control device refers to a means for discriminating three kinds of operation states of a constant temperature, a temperature rise and a temperature fall, and a deciding circuit controls the operation of a refrigerator and a blower based on the discrimination result.

However, the discriminating circuit is provided with the setting signal derived from a setting signal generator only, while the actual control is done by a feed-back circuit acting upon a temperature controller. This temperature controller is supplied with a signal from a temperature sensor and with the output signal of the temperature setting signal generator and gives a compare signal to a power controller acting on an electric heater. Thus, the actual control is poor and a bad control results from the temperature controller acting upon the heater only.

From "Plastics and Rubber International", Vol. 4, No. 5, September 1979, pages 211 to 215, it is known to provide an injection molding maching with a separate heating and cooling channel via a P, a PD or a PID controller. In order to minimize an offset error, this state of the art intends to use a PID controller for compensating the error.

On the other hand, the effectiveness of control largely depends on the width of the proportional band. As may be taken from this reference, there may be a small overshoot even if the proportional band is wide, if mere proportional control is used. The use of a PID controller, however, gives worse results as to the start-up performance. On the other hand, the overshoot is critical with injection molding machines as it may deteriorate the properties of the used plastics material.

Conventionally, the temperature control device of the type with separate proportional bands for heating and cooling control actions has been used for temperature control of an injection molding machine which is equiped with a heating cylinder and a cooling jacket around the cylinder.

Referring to Fig. 6, one example will be described hereinafter.

In Fig. 6 a heating cylinder 10 comprises a screw 12 which is capable of reciprocating and rotating motion. A heater 14 of a heating means and a cooling jacket 16 of a cooling means are provided on the peripheral surface of the heating cylinder 10. A thermocouple 18 for temperature detection is disposed at each temperature control zone where the heater 14 and the cooling jacket 16 are provided. The heater 14 is connected through a switch 22 to a power supply 20. The cooling jacket 16 is connected through an electromagnetic valve 26 to such a cooling medium supply source 24 as a blower for supplying cooling air.

The switch 22 and the electromagnetic valve 26 are respectively connected to a temperature controller 28.

The temperature controller 28 comprises a temperature control circuit 30 for setting proportional bands which determine heating and cooling energies for heating and cooling medium in the heater 14 and the cooling jacket 16, respectively. The temperature controller may include other necessary means such as arithmetic processing units, etc.

The term "proportional band" will be briefly described hereinafter in connection with a typical example in which a controlled object and a control unit constitute a feedback system.

When temperature of a heavy oil as a controlled medium is controlled to a constant value by means of a heater in the feedback system, the control unit consists of a detection means for detecting oil temperature, a control means for comparing the oil temperature with a desired value by means of a controller and generating an appropriate signal and an operation means for equalizing the oil temperature to the desired value.

In this case, a feedback circuit is formed between the controlled medium (heater) and the control unit.

Then, in the detection means, thermocouple and resistance bulb, the heavy oil and the oil temperature respectively act as a primary element, a controlled medium and a controlled variable. The control means may consist of a power unit and a final control element, in which vapor and vapor flow rate are respectively regarded as a control agent and a manipulated variable.

In such a feedback system, a proportional positioning action which is generally referred to as P-action can be determined by the following equations:

$$- (\mu - \mu_v) = K_p (x - v) \quad (1)$$

or

$$- (\mu - \mu_v) = \frac{l}{S} (x - v) \quad (2)$$

where, x = controlled variable; v = desired value;
$\mu_v$ = position of final control element.

Namely, it is noted that the control variable is in proportion to a position of the final control element (manipulated variable).

In the above equations, $K_p$ is referred to as a proportional sensitivity or proportional gain and S which is represented by percentage of an inverse of $K_p$ is referred to as proportional band.

Namely, the proportional band is percentage representation of a range of the controlled variable in which the final control element is controlled over all manipulated variable range in proportional relation, relative to all scale range of a controller. For example, when the scale range of the controller is 0°C to 200°C and the temperature as a controlled variable varies by 40°C in response to all manipulated variable of a valve as a final control element, the proportional band is 20%.

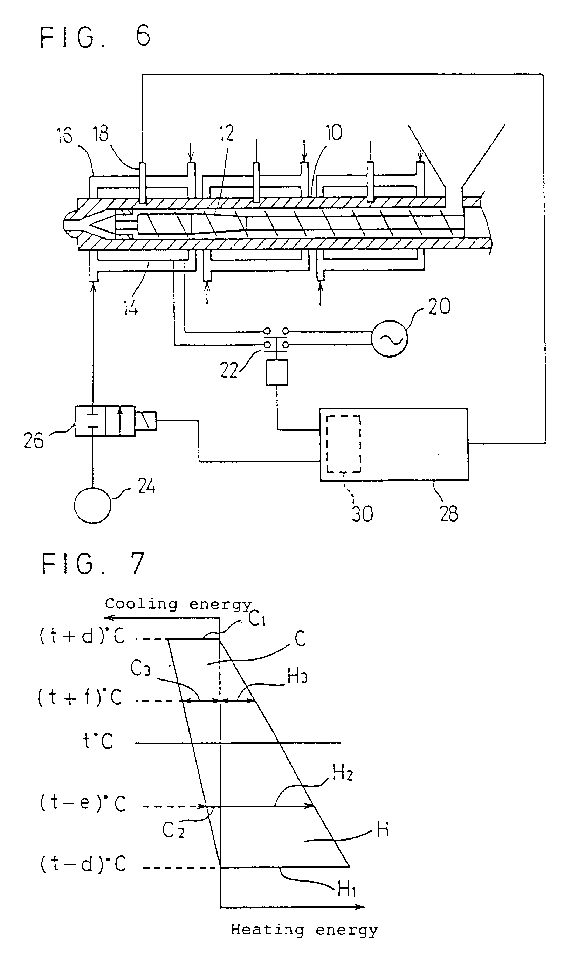

Fig. 7 shows such a relation between controlled variable, manipulated variable and proportional band.

Even though any load change occurs in P-action, there is no change in relation between the controlled variable and the position of the final control element.

Namely, only one position of the valve corresponds to certain pen position of the controller.

Accordingly, the pen position representing the controlled variable corresponds to a desired position, i.e., a set point only when a special load is given. Generally, the pen is allowed to be deviated from the set point even under balanced condition. The deviation is referred to as residual deviation or offset.

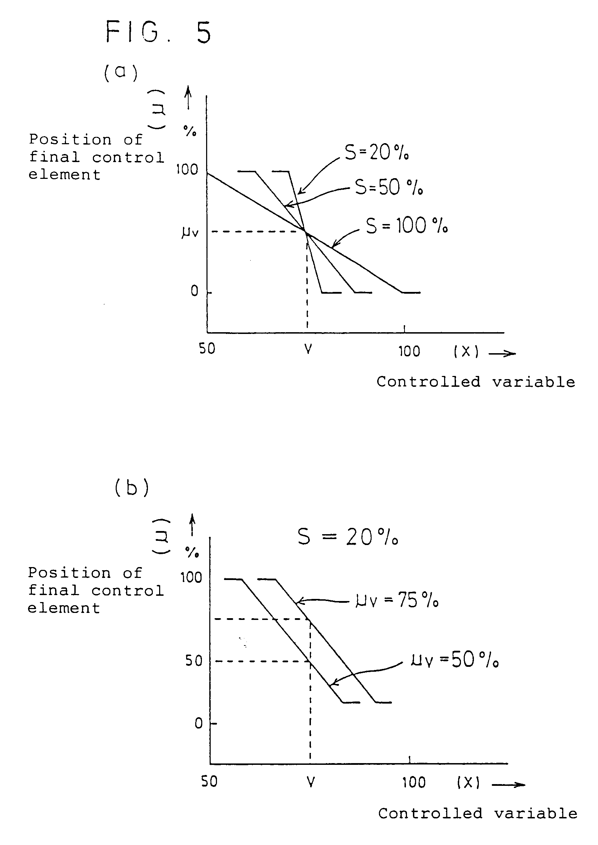

A general proportional positioning type controller has a adjusting mechanism referred to as a manual reset. The adjusting mechanism acts such that the pen position corresponds to the set point under balanced condition by moving the proportional band shown in a graph of Fig. 5(a) in the direction of axis of abscissas according to changes in process condition as illustrated in Fig. 5(b).

For example, using a controller having a scale mark of 0°C to 200°C in which the proportional band is 20% (namely 40°C range), an oil temperature controlled to a set point of 150°C whereupon an opening of a valve through which a vapor is passed is 50% and the system is under balanced condition. In such a case, if a flow rate of oil is doubled, the valve must be opened until its opening reaches 75% in order to obtain a necessary quantity of heat. In this case, the 75% valve opening causes the pen to be moved down to 140°C. In order to obtain the 75% valve opening and eliminate an offset without temperature drop, the manual reset mechanism moves the proportional band to the right such that the valve opening increases from 50% to 75%.

As the proportional band becomes narrow, namely, as proportional sensitivity becomes increased, control operation is close to on-off operation. To this end, the offset is increased while a cycling is reduced.

Therefore, P-action is rendered correctable in size by controlling the proportional band and safe in operation. Generally, it can be used for not only a process which has small load fluctuation and small or medium reaction rate, but an astatic process such as on-off operation.

Further, Fig. 7 shows a typical energy balance in which a temperature is controlled by controlling heating and cooling energy supplies.

Namely, heating or cooling energy is varied from 0% to 100% in accordance with predetermined control period and deviation of an actual temperature from desired set temperature.

In this case, energy supply by heating means and energy supply by cooling means are often not equal for controlling a heat quantity of the controlled medium which is subjected to temperature control. In an injection molding machine illustrated in Fig. 6, energy supply by heating means is larger than relative to that by cooling means. As shown in Fig. 7, heating energy and cooling energy which are supplied when the actual temperature is deviated from the desired set temperature, are respectively represented as H and C.

The H and C are varied depending upon heating and cooling capacity of the injection molding machine. Also, the energies are varied under such conditions as amounts of internal calorific power and of heat radiation to the external caused due to shearing action of a screw upon resin's plasticization and melting.

In Fig. 7, 100% cooling energy $C_1$ is supplied at the temperature $(t + d)°C$, where the desired set temperature is t°C. In temperature range from $(t - d)°C$ to $(t + d)°C$, heating energy and cooling energy are respectively supplied in different timing.

For example, at temperature $(t - e)°C$, heating energy $H_2$ and cooling energy $C_2$ are respectively supplied in different timing.

Therefore, respective supplies of heating energy and cooling energy are kept to be balanced at temperature $(t + f)°C$ at which heating energy $H_3$ and cooling energy $C_3$ are equal to each other.

In this case, an offset of f°C is generated at proportional-action control. In order to eliminate the offset, Pi control which is a combination of proportional control and integral control can be used.

In a controlled object having both heating means and cooling means, temperature controls for heating means and cooling means are performed by using one temperature control circuit.

In such controlls as P (proportional)-action control, Pi (proportional plus integral)-action control, PiD (proportional plus integral plus derivative)-action control and the like, the ratio of energy supply period to predetermined control period is varied on the basis of controlled variable to be calculated from size or change velocity of the deviation of the actual temperature of the controlled medium from the desired set temperature. Therefore, both control constant such as P, i, D and the proportional band for control are identically controlled.

However, a conventional temperature control device has the following disadvantages.

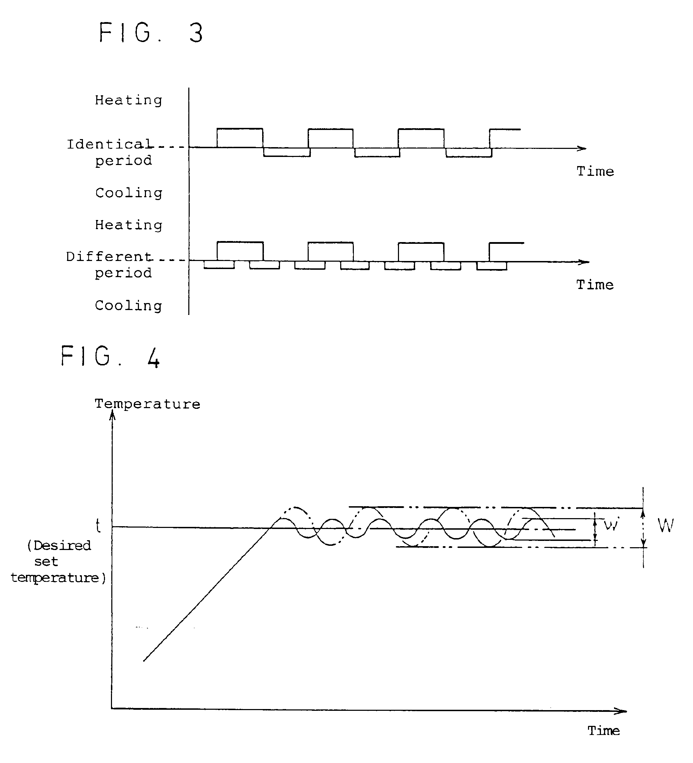

Namely, in spite that the aforementioned offset can be eliminated by the Pi-action control, hunting having large temperature fluctuation relative to the desired temperature t°C is generated, as shown in Fig. 4, due to heating energy $H_3$ and cooling energy $C_3$ supplied in different timing during constant control period.

Further, in the controlled medium having both heating means and cooling means, there is often considerable difference in volume between heating load, i.e., a temperature-rise characteristic due to heating energy supplied by heating means, and cooling load, i.e., a temperature-drop characteristic due to cooling energy supplied by cooling means. For this reason, a stable temperature control can not be easily performed by using a common temperature control circuit.

Accordingly, it is an object of the present invention to provide a temperature control device with high accuracy and stability which is capable of limiting hunting at desired control temperature to a small width even in a controlled medium having obviously large difference between heating load and cooling load.

In order to realize the object, a temperature control device according to the invention comprises heating and cooling means and separate control circuits for the heating means and the cooling means for performing proportional control, integral control, derivative control and the like by which ratio of energy supply period to predetermined control period is varied so as to control heating energy supply and cooling energy supply for the respective means on the basis of a controlled variable calculated from direction, size, change velocity and the like of deviation of actual temperature of a controlled medium from desired set temperature. In addition, the device according to the invention can separately control the heating means and the cooling means by using different proportional bands.

In this case, the different proportional bands are formed of first and second ones for separately controlling the heating means and the cooling means. Preferably, the desired value, i.e., set point in the proportional bands can be set separately.

Also, the different proportional bands having different widths can be set separately.

Further, the control periods for heating energy supply and cooling energy supply can be set separately and independently.

On the other hand, one temperature set point for heating and cooling control can be obtained from internal arithmetic by using predetermined relational expression.

In such a case, one temperature set point for heating and cooling control may be obtained from the internal arithmetic by selecting respective coefficients for one set of relational expressions or one set selected from a plurality of the sets. Moreover, the temperature set point for the heating and cooling control may be obtained from the internal arithmetic by using measurement results of actual temperature change during optionally selected period.

According to a temperature control device of the invention, separate proportional bands for heating and cooling control are independently set.

In view of energy balance used for controlling a set temperature to be a desired value, respective supplies of heating energy and cooling energy are controlled so as to become smaller without excess load thereof at a temperature set point. Therefore, overshooting of heating and cooling energy upon temperature control is reduced to effectively minimizing hunting width at the desired temperature for heating and cooling control.

In this case, if a control period and a temperature set point are separately set for heating and cooling control, the hunting width can be limited more effectively.

Preferred embodiments of a temperature control device according to the present invention will be described hereinafter in detail with reference to the accompanying drawings, in which like reference numerals refer to like parts without a detailed explanation for the respective parts in conventional heating and cooling proportional bands shown in Fig. 7, and in which:

Fig. 1 is a typical diagram of heating and cooling proportional bands according to a first embodiment of the present invention;

Fig. 2 is a typical diagram of another heating and cooling proportional bands according to a second embodiment of the present invention;

Fig. 3 is a diagram of separately predetermined heating and cooling control periods according to a third embodiment of the present invention;

Fig. 4 is a graph of temperature control characteristic;

Figs. 5(a) and 5(b) are diagrams of generally known heating and cooling proportional bands;

Fig. 6 is a schematic diagram of a temperature control device according to the present invention, which is used for a heating cylinder for an injection molding machine; and

Fig. 7 is a typical diagram of conventional heating and cooling proportional bands.

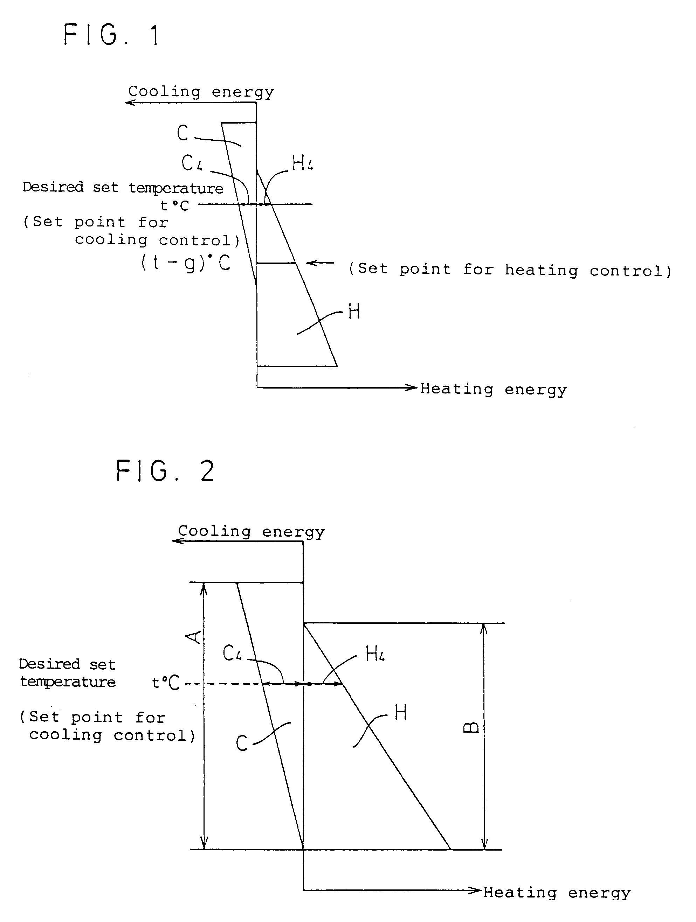

Fig. 1 shows separate proportional bands set for heating and cooling controls according to a first embodiment of the present invention.

Referring now to Fig. 1 a first proportional band H for heating control and a second proportional band C for cooling control are separately set. For these separate proportional bands H and C shown in Fig. 1, start and end points of heating and cooling energy supplies are varied independently while respective set points differs by g°C from each other.

In this case, heating energy $H_4$ and cooling energy $C_4$ supplied at a balanced set point are less than heating energy $H_3$ and cooling energy $C_3$ shown in Fig. 7. Therefore, the respective heating and cooling energy supplies can be more effectively balanced.

Fig. 2 shows a second embodiment of the invention, in which a first proportional band C having a width A and a second proportional band H having a width B which differs from the width A.

Namely, the second proportional band H is changed in width in order to equalize cooling energy $C_4$ with heating energy $H_4$, so that a good balance of heating and cooling energy supplies can be obtained.

Fig. 3 shows a third embodiment of the invention, in which two different supply periods for heating and cooling energy are illustrated.

An upper diagram in Fig. 3 shows the case where heating energy and cooling energy are supplied at an identical period in a conventional manner. A lower diagram in Fig. 3 shows another case where heating energy and cooling energy are respectively supplied at different periods.

In the lower illustrated diagram, adoption of different supply periods for heating and cooling energy can realize a good balance of heating and cooling energy supplies.

Thus separately set first and second proportional bands can perform heating and cooling controls such that balanced heating and cooling energies $H_4$ and $C_4$ for the set temperature are less than the heating energy $H_3$ and the cooling energy $C_3$ in Fig. 7 to be supplied in the conventional manner. To this end, both heating and cooling energy supplies can reach better balanced level so that a hunting width w according to this invention becomes smaller as compared with a conventional one W illustrated with alternate long and two short dashes line in Fig. 4.

Further, in a fourth embodiment of the invention, each set point for heating and cooling controls can be determined relative to a common desired point at a balanced energy supplies from an arithmetic by using a pair of relational expressions (1) described below.

In a fifth embodiment of the invention, each set point for heating and cooling controls can be determined relative to one common temperature set point at balanced energy supplies from an arithmetic after optionally selecting relational expressions to be used from memorized one of or a plurality of relational expressions (2-1) and (2-2) and selecting coefficients for the selected relational expressions.

$$t1 = t0 + \alpha$$
$$t2 = t0 - \beta \quad (1)$$

$$t1 = k1 \cdot t0 + \alpha_1$$
$$= k2 \cdot t0 + \alpha_2 \quad \ldots \ldots \quad (2-1)$$

$$\underline{\qquad\qquad\qquad}$$

$$= kn \cdot t0 + \alpha_n$$

$$t2 = k1' \cdot t0 - \beta_1$$
$$t2 = k2' \cdot t0 - \beta_2 \quad \ldots \ldots \quad (2-2)$$

$$\underline{\qquad\qquad\qquad}$$

$$= kn' \cdot t0 - \beta_n$$

where, t1 = set point of heating temperature;
t2 = set point of cooling temperature;

5

$t0$ = common temperature set point;
$\alpha$ - $\alpha n$, $\beta$ - $\beta n$ = constant; and
$k1$ - $kn$, $k1'$ - $kn'$ = coefficient.

Moreover, in a sixth embodiment of the invention, the temperature set points can be determined from an internal arithmetic based on a measurement result of fluctuation in actual temperature within time period optionally determined.

In addition, the present invention can not be limited to be used for a heating cylinder but applied to a wide variety of such similar devices as a heating roller for circulating a heating medium thermally controlled by heaters and cooling water to objects of temperature control, an extruding die for plastic molding, a mold for injection molding and the like.

As is obvious from the aforementioned embodiments, a temperature control device according to the invention comprises different proportional bands for separately controlling heating means and cooling means so as to separately control heating and cooling energy supplies to the heating means and the cooling means by using separate control circuits in which proportional control, integral control, differential control and the like are carried out on the basis of arithmetic results in direction, size, variation, velocity and the like of deviation of actual temperature of a controlled medium from desired set temperature. To this end, overshooting of heating and cooling are reduced upon the temperature control so that a hunting width at desired temperature can be controlled as small as possible.

In this case, if control periods and temperature set points are separately selected for heating and cooling controls, the hunting width can be restricted.

## Claims

1.  A temperature control device comprising heating means (14) and cooling means (16) which are controlled by separate control circuits by which a ratio of energy supply periods to predetermined control periods is varied, on the basis of a controlled variable calculated from parameters of deviation of actual temperature of a controlled medium from desired set temperature so as to control heating and cooling energy supplies for heating and cooling means (14, 16), said heating means (14) and said cooling means (16) being capable of being separately controlled by means of different proportional bands, **characterized** in that said separate control circuit (30) performs proportional control, integral control and derivative control for controlling said ratio, that said parameters are selected from direction, size, change velocity and the like of deviation of actual temperature of a controlled medium from desired set temperature and that different proportional bands consist of first and second proportional bands for separately performing heating and cooling controls and respective width of proportional bands are independently set.

2.  The temperature control device according to claim 1, characterized in that respective set points for said proportional bands are independently set.

3.  Temperature control device according to claim 1 or 2, characterized in that said control periods are independently set for heating and cooling.

4.  Temperature control device according to claims 1 to 3, characterized in that a temperature set point for each heating and cooling controls is obtained from internal arithmetic by using a common set point in predeterminded relational expression.

5.  Temperature control device according to one of the claims 1 to 3, characterized in that a temperature set point for each of heating and cooling controls is obtained from internal arithmetic by using a common set point in a pair of predetermined relational expressions or a pair selected from a plurality of predetermined relational expressions, for which respective coefficients are selected.

6.  Temperature control device according to one of the claims 1 to 3, characterized in that a temperature set point for each of heating and cooling controls is obtained from internal arithmetic on the basis of measurement results of actual temperature change during an optionally selected period.

## Patentansprüche

1. Temperaturregelvorrichtung, die eine Heizvorrichtung (14) und eine Abkühlvorrichtung (16) aufweist, die durch separate Steuerschaltkreise gesteuert werden, durch die ein Verhältnis von Energiezufuhrzeitabschnitten zu vorher festgelegten Regelzeitabschnitten basierend auf einer Regelvariablen variiert wird, die aus Abweichungsparametern der tatsächlichen Temperatur eines geregelten Mediums von der gewünschten eingestellten Temperatur berechnet wird, um die Energiezufuhr zur Heiz- und Abkühlvorrichtung (14, 16) zum Heizen und Abkühlen zu regeln, wobei die Heizvorrichtung (14) und die Abkühlvorrichtung (16) mit Hilfe unterschiedlicher Proportionalitätsbereiche separat geregelt werden können, dadurch **gekennzeichnet**, daß der separate Steuerschaltkreis (30) zur Regelung des Verhältnisses eine Proportional-Regelung, eine Integral-Regelung und eine Differential-Regelung ausführt, daß die Parameter aus Richtung, Größe, Veränderungsgeschwindigkeit und dgl. der Abweichung der tatsächlichen Temperatur eines geregelten Mediums von der gewünschten eingestellten Temperatur ausgewählt ist, und daß unterschiedliche Proportionalitätsbereiche aus ersten und zweiten Proportionalitätsbereichen bestehen, um die Heiz- und die Abkühlregelungen separat auszuführen, und jeweilige Breiten der Proportionalitätsbereiche unabhängig voneinander eingestellt sind.

2. Temperaturregelvorrichtung nach Anspruch 1, dadurch gekennzeichnet, daß jeweilige Einstellwerte für die Proportionalitätsbereiche unabhängig voneinander eingestellt sind.

3. Temperaturregelvorrichtung nach Anspruch 1 oder 2, dadurch gekennzeichnet, daß die Regelzeitabschnitte zum Heizen und Abkühlen unabhängig voneinander eingestellt sind.

4. Temperaturregelvorrichtung nach den Ansprüchen 1 bis 3, dadurch gekennzeichnet, daß man einen Temperatur-Sollwert für jede Heiz- und Abkühlregelung aus einer internen Berechnung durch Verwendung eines gemeinsamen Sollwerts nach einem vorher festgelegten Vergleichsausdruck erhält.

5. Temperaturregelvorrichtung nach einem der Ansprüche 1 bis 3, dadurch gekennzeichnet, daß man einen Temperatur-Sollwert für jede Heiz- und Abkühlregelung aus einer internen Berechnung durch Verwendung eines gemeinsamen Sollwerts in einem Paar vorher festgelegter Vergleichsausdrücke oder einem aus einer Vielzahl von vorher festgelegten Vergleichsausdrücken ausgewählten Paar erhält, wofür jeweilige Koeffizienten ausgewählt sind.

6. Temperaturregelvorrichtung nach einem der Ansprüche 1 bis 3, dadurch gekennzeichnet, daß man einen Temperatur-Sollwert für jede Heiz- und Abkühlregelung aus einer internen Berechnung basierend auf Meßergebnissen der tatsächlichen Temperaturveränderung während eines willkürlich ausgewählten Zeitabschnitts erhält.

## Revendications

1. Dispositif de réglage de température comprenant des moyens de chauffage (14) et des moyens de refroidissement (16), qui sont commandés par des circuits de commande séparés, grâce auxquels on fait varier un rapport des périodes d'alimentation en énergie par rapport à des périodes de réglage prédéterminées, sur la base d'une variable commandée calculée à partir de paramètres de déviation de la température réelle d'un milieu contrôlé par rapport à une température fixée souhaitée, de façon à commander l'alimentation en énergie de chauffage et de refroidissement destinée à des moyens de chauffage et de refroidissernent (14,16), lesdits moyens de chauffage (14) et lesdits moyens de refroidissement (16) pouvant être commandés séparément au moyen de bandes proportionnelles différentes, caractérisé en ce que ledit circuit de commande séparé (30) effectue un réglage proportionnel, un réglage intégrateur et un réglage dérivateur pour régler ledit rapport, en ce que lesdits paramètres sont choisis parmi la direction, l'amplitude, la vitesse de changement et analogues, de la déviation de la température réelle d'un milieu contrôlé par rapport à une température souhaitée fixée, et en ce que les différentes bandes proportionnelles comprennent des premières et des secondes bandes proportionnelles pour effectuer séparément les réglages de chauffage et de refroidissement, et en ce que les largeurs respectives des bandes proportionnelles sont fixées de façon indépendante.

2. Dispositif de réglage de température selon la revendication 1, caractérisé en ce que les points respectifs fixés pour lesdites bandes proportionnelles sont fixés de façon indépendante.

3. Dispositif de réglage de température selon la revendication 1 ou 2, caractérisé en ce que lesdites périodes de réglage sont fixées de façon indépendante pour le chauffage et le refroidissement.

4. Dispositif de réglage de température selon les revendications 1 à 3, caractérisé en ce qu'un point de température fixé pour chaque réglage de chauffage et de refroidissement est obtenu à partir d'une arithmétique interne en utilisant un point commun fixé selon une relation prédéterminée.

5. Dispositif de réglage de température selon l'une des revendications 1 à 3, caractérisé en ce qu'un point fixé de température est obtenu à partir d'une arithmétique interne pour chacun des réglages de chauffage et de refroidissement en utilisant un point commun fixé selon une paire d'expressions respectives prédéterminées ou une paire choisie à partir d'une pluralité d'expressions respectives prédéterminées, pour lesquelles des coefficients respectifs sont choisis.

6. Dispositif de réglage de température selon l'une des revendications 1 à 3, caractérisé en ce qu'un point de température fixé est obtenu pour chacun des réglages de chauffage et de refroidissement à partir d'une arithmétique interne sur la base des résultats de mesure de la variation réelle de température pendant une période choisie de façon arbitraire.

# FIG. 1

Cooling energy

C

C$_l$

H$_l$

Desired set temperature
t °C
(Set point for
cooling control)

(t − g)°C

(Set point for heating control)

H

Heating energy

# FIG. 2

Cooling energy

A

C$_l$

H$_l$

Desired set
temperature  t°C
(Set point for
cooling control)

C

H

B

Heating energy

# FIG. 3

Heating

Identical --- period

Cooling

Heating

Different --- period

Cooling

Time

Time

# FIG. 4

Temperature

t

(Desired set temperature)

Time

# FIG. 5

(a)

Position of final control element

(b)

S = 20%

Position of final control element

# FIG. 6

# FIG. 7